Europäisches Patentamt

European Patent Office

Office européen des brevets

(19)

(11) **EP 0 974 038 B1**

(12) **EUROPÄISCHE PATENTSCHRIFT**

(45) Veröffentlichungstag und Bekanntmachung des Hinweises auf die Patenterteilung:
**07.08.2002 Patentblatt 2002/32**

(51) Int Cl.⁷: **G01B 11/24**, G02C 13/00, B24B 9/14, B24B 49/12

(21) Anmeldenummer: **98921355.8**

(22) Anmeldetag: **18.03.1998**

(86) Internationale Anmeldenummer:
**PCT/DE98/00713**

(87) Internationale Veröffentlichungsnummer:
**WO 98/45664 (15.10.1998 Gazette 1998/41)**

(54) **MESSANORDNUNG SOWIE VERFAHREN ZUM BERÜHRUNGSLOSEN ERFASSEN DER 3-DIMENSIONALEN RAUMFORM EINER IN EINER BRILLENFASSUNG UMLAUFENDEN NUT**

MEASURING DEVICE AND METHOD FOR CONTACTLESS DETERMINATION OF THE 3-DIMENSIONAL FORM OF A PERIPHERAL GROOVE IN A SPECTACLE FRAME

DISPOSITIF DE MESURE ET PROCEDE POUR DETERMINER SANS CONTACT LA FORME TRIDIMENSIONNELLE D'UNE RAINURE PERIPHERIQUE DANS UNE MONTURE DE LUNETTES

(84) Benannte Vertragsstaaten:
**DE ES FR GB IT**

(30) Priorität: **10.04.1997 DE 19714929**
**13.06.1997 DE 19725158**

(43) Veröffentlichungstag der Anmeldung:
**26.01.2000 Patentblatt 2000/04**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
• **BERNDT, Dirk**
  **D-39128 Magdeburg (DE)**
• **STEINMANN, Christian**
  **D-39108 Magdeburg (DE)**

(74) Vertreter: **Rösler, Uwe, Dipl.-Phys. et al**
**Rösler Patentanwaltskanzlei**
**Landsberger Strasse 480a**
**81241 München (DE)**

(56) Entgegenhaltungen:
**DE-A- 4 224 640          FR-A- 2 713 758**

**Beschreibung**

Technisches Gebiet

Die Erfindung bezieht sich auf eine Meßanordnung zum berührungslosen Erfassen der 3-dimensionalen Raumform einer in einer Brillenfassung umlaufenden Nut mit einer Lichtquelle, deren Lichtstrahl auf die Nut gerichtet ist, einem optischen Abbildungssystem, das das an der Nut reflektierte Licht auf eine optische Detektoreinheit abbildet und weitgehend zentrisch zu der zu vermessenden Nut der Brillenfassung angeordnet ist, einer die Brillenfassung tragenden Haltevorrichtung, die relativ zu der Lichtquelle, der Detektoranordnung sowie dem optischen Abbildungssystem um eine Zentrierachse einer von der umlaufenden Nut der Brillenfassung einbeschriebenen Fläche drehbar gelagert ist, sowie einer Auswerteeinheit zur Ermittlung der 3-dimensionalen Raumform der Nut.

Stand der Technik

In der Augenoptik werden heute zum größten Teil Meßvorrichtungen mit taktilen Meßtastern zum Vermessen des räumlichen Fassungsnutverlaufes eingesetzt. So ist es aus der DE-PS 41 31 331 eine Testvorrichtung zum Abtasten der Kontur von Brillengestellöffnungen oder von Schablonen für das Umfangschleifen von Brillengläsern vorbekannt. Die Testvorrichtung gemäß DE-PS 41 31 331 besteht aus einer Halterung für das Brillengestell oder die Schablone, einem mit einem Tastkopf in die Nut der Brillengestellöffnung eingreifenden oder an den Umfang der Schablone anlegbaren Taststift, weiterhin aus einer nur in x- und y-Richtung parallel zu der Ebene der Brillengestellöffnung oder der Schablone beweglichen, eine Drehung verhindernde Geradführung für den Taststift und schließlich einem Weggeber für die x-Richtung sowie einem Weggeber für die y-Richtung.

Die in der DE-PS 41 31 331 beschriebene liefert jedoch nur eine angenäherte Raumkurve der Fassungsnut, da das Abtasten durch körperliche Berührung mit dem beispielsweise als Stift oder Kugel ausgeführten formstarren Tastkörper entlang der Fassungsnut erfolgt. Die auf diese Weise aufgezeichnete Raumkurve des Fassungsnutverlaufes wird z. B. über den Verlauf eines definierten Testkörperpunktes festgelegt. Die korrekte Abbildung aller Feinheiten der eigentlichen Nut kann dabei nicht erfolgen und die der Nut zugehörige komplementäre Glasfacette kann somit auch nur annäherungsweise korrekt zugeschliefen bzw. erzeugt werden. Formabweichungen zwischen dem exakten Verlauf der Fassungsnut und der Glasfacette des Brillenglases rufen jedoch Spannungen in dem Brillenglas hervor, die leicht zu einem Sprung oder Bruch des Glases führen können. Der Gegenstand der DE-PS 41 31 331 weist überdies den Nachteil auf, daß die Tastvorrichtung zum Abtasten der Kontur durch unmittelbaren mechanischen Kontakt eine Halterung für die Brillenfassung voraussetzt, die die Fassung gegen die Kraftbeaufschlagung durch die Tastvorrichtung einspannt. Hierdurch kann die Spannvorrichtung selbst als auch der Taststift das Brillenfassungsbauteil verformen, wodurch es zu einer weiteren Ungenauigkeit in der Messung kommt. Darüber hinaus haben die taktilen Meßvorrichtungen den Nachteil, daß sie nur für die Erfassung des groben Fassungsnutverlaufes konzipiert worden sind und Daten über die gesamte dreidimensionale Geometrie sowohl des Fassungsbauteiles selbst wie auch der weiteren Bestandteile einer Brillenfassung nicht liefern können.

Auch werden Abtastvorrichtungen der vorstehend beschriebenen Gattung als Tracer bezeichnet, deren Messzeiten zum Erfassen des Nutverlaufes in einer Brüfenfassung ca. 12 s betragen. Hierbei werden üblicherweise 512 Formdaten aufgenommen und zur Weiterverarbeitung gespeichert. Die Messgenauigkeit beträgt ca. 0,01mm. Problematisch ist die korrekte Aufnahme der Brillenform. Die bisher entwickelten Geräte sind nicht in der Lage das gesamte Spektrum von Brillenformen erfassen zu können. "Extreme" Radien bzw. sehr große 3D-Formen können nicht vermessen werden. Zwar ist die Messgenauigkeit für die bisherigen Glasschleifgeräte ausreichend, doch werden künftig zum Anpassen der Gläser Fräser verwendet, die wesentlich genauer angesteuert werden können. Voraussetzung hierfür ist jedoch eine präzisere Vermessung der Brillenformen.

Weitere Beispiele für Brillenfassung-Abtastvorrichtungen der vorstehend genannten Gattung sind auch den Druckschriften DE 41 07 894 A1, DE 41 28 571 A1 sowie EP 0 344 725 zu entnehmen.

In der DE-OS 40 19 866 ist eine Vorrichtung zum Abtasten und Speichern von Daten einer Öffnung eines Brillengestells oder einer Schablone beschrieben, mit einem das Brillengestell oder die Schablone tragenden Rahmen, einer die Brillengestellöffnung oder die Schablone berührungslos abtastenden Abtastvorrichtung und einem Winkelmeßwertgeber, der die Drehwinkel der Abtaststellungen der Brillenöffnung oder der Schablone erfaßt.

Die Abtastvorrichtung besteht aus mindestens einem Video-Scanner-System, das unter einem Winkel von $0°<\alpha<90°$ zur Achse der Brillengestellöffnung oder der Schablone angeordnet ist und um diese Achse als Rotationsachse zusammen mit der Auswerteelektronik und dem Winkelmeßwertgeber drehbar ist. Das Video-Scanner-System ist zudem relativ zur Rotationsachse schwenkbar angeordnet. Der Schwenkmittelpunkt für die Rotationsachse liegt in der Ebene der Brillengestellöffnung oder der Schablone.

Beim Gegenstand der DE-OS 40 19 866 werden die mit dem Video-Scanner System ermittelten Daten durch eine Auswerteelektronik in eine Raumkurve der Brillenfassungsöffnung oder der Schablone und/oder der eventuell erforderlichen Glasfacette umgerechnet und zur Steuerung eines Brillenrandschleifautomaten gespeichert.

Mit der in der DE-OS 40 19 866 beschriebenen Vorrichtung läßt sich jedoch die dreidimensionale Raumform insbesondere der Fassungsnutform und des Fassungsnutverlaufes nicht exakt erfassen. Dies liegt u.a. daran, daß die Nutwände in einem Winkel zueinander stehen, so daß Abschattungseffekte bei der optischen Abtastung der Nutwände durch das in einem Winkel zur senkrechten Achse durch die Brillenöffnung angeordneten Video-Scanner-System auftreten.

Ein weiterer Nachteil der vorbeschriebenen Anordnung ist der komplizierte, technisch sehr aufwendige Aufbau, der mit hohen Kosten verbunden ist sowie zum Betrieb komplizierte Steuer- und Auswerteprogramme erfordert.

Eine weitere bekannte Vorrichtung geht aus der DE 42 24 640 C2 hervor, in der ein Gerät für die automatische Messung von Form und Profil der Innenkontur eines Brillenfassungsrahmens beschrieben ist, das die Kontur berührungsarm bzw. -los mit Hilfe von Lichtstrahlen erfaßt. Eine bevorzugte Ausführungsform des Gerätes ist in Fig. 6 unter Bezugnahme auf die Beschreibung in Sp. 3, Z. 25 bis Sp. 4, Z. 2 in der Druckschrift näher erläutert. Insbesondere sind zwei Lichtquellen S1 und S2 vorgesehen, die jeweils parallele und koplanare Lichtbündel auf die zu vermessende Brillennut abstrahlen und diese nicht notwendigerweise linienförmig beleuchten. Das an der Brillennut zurückreflektierte Licht wird mit Hilfe lichtempfindlicher Mittel 30 aufgenommen und in einer nicht näher angegebenen Weise derart ausgewertet, so daß die Berechnung der Form und des Profils der Innenkontur des Brillenfassungsrahmens möglich sein soll.

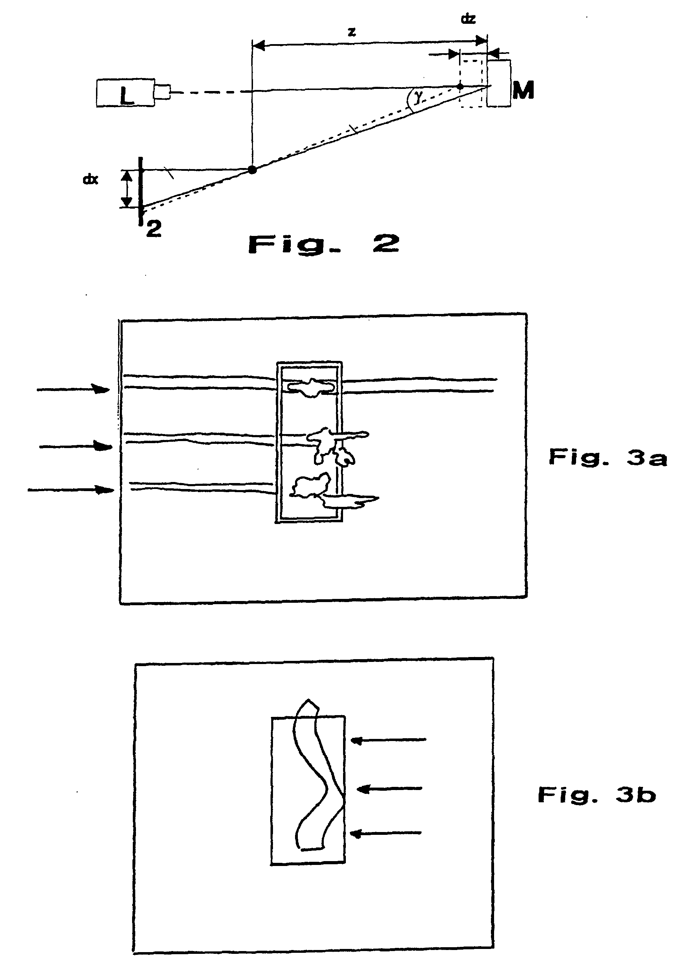

Mit Hilfe der in der Druckschrift nicht näher angegebenen Berechnungsmethode soll es insbesondere möglich sein, die geometrischen Parameter (R1, R2, R3, H1, H2, H3, s. hierzu Fig. 3) des Fassungsrahmens zu ermitteln. Insbesondere geht aus Z. 37 bis 42 in Sp. 3 hervor, daß die vorstehend erwähnten Geometrieparameter ausschließlich in Kenntnis des Winkels $\alpha_3$ oder des Abstandes D zwischen den zwei Punkten der Lichtquellen S1 und S2 ermittelt werden können. Dies jedoch setzt die Verwendung von zwei getrennten Lichtquellen voraus.

Nachteilhaft dieser bekannten Vorrichtung ist die Verwendung zweier Lichtquellen, die eine beidseitige, präzise Justierung zu der zu vermessenden Brillenfassungsnut erfordern, wodurch zum einen ein erhöhter Justageaufwand verbunden ist und zum anderen Fehlerquellen durch mögliche Dejustage auftreten können. Auch können Schwankungen in der Bestrahlungsstärke bei beiden Lichtquellen die Messung nachhaltig beeinflussen, so daß überdies Sorge dafür getragen werden muß, daß die Lichtquellen mit gleicher Bestrahlungsstärke betrieben werden können. Dies setzt einen entsprechend hohen Regelungsaufwand voraus.

Schließlich geht aus der DE 93 17 381.4 U1 eine Vorrichtung zum berührungslosen Abtasten der Öffnung eines Brillengestells mit nur einer einzigen Lichtquelle hervor, doch beruht die Erfassung der Innenkontur der Brillenfassungsnut auf einem Meßprinzip, das durch Bewegung eines optischen Umlenksystems eine Abstandsmessung im Wege einer Interferenzmessung gestattet. Nachteilhaft hierbei ist die sehr langdauernde Meßprozedur zur Ermittlung der gesamten dreidimensionalen Raumform der Brillenfassungsnut, zumal zum Vermessen eines einzigen Schnittprofils durch die Nut mehrere Meßpunkte erfaßt werden müssen, die einzeln jeweils durch entsprechende Interferenzmeßprozeduren gewonnen werden.

Darstellung der Erfindung

Der Erfindung liegt die Aufgabe zugrunde eine Meßanordnung sowie ein Verfahren zum berührungslosen Erfassen der 3-dimensionalen Raumform einer, in einer Brillenfassung umlaufenden Nut derart anzugeben, daß die Innenkontur der Nut einer Brillenfassung exakt ermittelt werden kann, ohne die beim Stand der Technik aufgezeigten Nachteile aufzuweisen. Die Meßanordnung soll technisch möglichst einfach und kostensparend ausgestaltet sein. Das Verfahren soll einen exakten Datensatz über die räumliche Beschaffenheit der Nut liefern.

Erfindungsgemäß ist eine Meßanordnung zum berührungslosen Erfassen der 3-dimensionalen Raumform einer, in einer Brillenfassung umlaufenden Nut mit einer Lichtquelle, deren Lichtstrahl auf die Nut gerichtet ist, einem optischen Abbildungssystem, das das an der Nut reflektierte Licht auf eine optische Detektoreinheit abbildet und weitgehend zentrisch zu der zu vermessenden Nut der Brillenfassung angeordnet ist, einer die Brillenfassung tragenden Haltevorrichtung, die relativ zu der Lichtquelle, der Detektoranordnung sowie dem optischen Abbildungssystem um eine Zentrierachse einer, von der umlaufenden Nut der Brillenfassung einbeschriebenen Fläche drehbar gelagert ist sowie einer Auswerteeinheit zur Ermittlung der 3-dimensionalen Raumform der Nut, derart ausgebildet, daß die Lichtquelle die Nut mit einem einzigen, linienförmig ausgebildeten Strahl beleuchtet, daß ein optisches Umlenksystem vorgesehen ist, das den Lichtstrahl von der Lichtquelle derart auf die Nut ablenkt, daß der linienförmige Strahl weitgehend senkrecht auf die von der umlaufenden Nut der Brillenfassung einbeschriebenen Fläche gerichtet ist, und daß die Lichtquelle und die Detektoranordnung relativ zu der zu vermessenden Nut einen fest vorgebbaren Triangulationswinkel einschließen, so daß die Anwendung des Lichtschnittverfahrens zur Ermittlung der 3-dimensionalen Raumform der Nut möglich ist.

Mittels des erfindungsgemäßen Meßaufbaus wird die zu vermessende Brillenfassung berührungsfrei an der Innenkontur mit Hilfe des linienförmigen Lichtstrahls abgescannt, so daß keine, die Brillenfassung verformende mechanische Anpreßkräfte, die beim vorgeschilderten Stand der Technik vorkommen, auftreten.

Vorzugsweise weist der Messaufbau eine CCD-Messkamera als Detektoreinheit auf, die über eine matrixförmig angeordnete Bildpixelanordnung verfügt, so daß eine ortsaufgelöste Strahlungsdetektion möglich ist. Überdies ist ein Laserprojektionssystem und als Haltevorrichtung ein Drehtisch vorgesehen.

Aufgrund der Tatsache, daß die Brillenfassungsöffnung zwischen min. 18mm und max. 60mm Öffnungsbreite schwankt, ist es notwendig die CCD-Messkamera sowie das Laserprojektionssystem außerhalb des eigentlichen Messraumes, d.h. außerhalb der zu vermessenden Öffnung der Brillenfassung anzuordnen. Um mit dieser Anordnung die Kontur der Brillenfassungsnut zu erfassen, ist eine optische Umlenkeinheit inmitten der Öffnung der Brillenfassung angebracht, die das Laserlicht direkt auf die Nut umlenkt. Das geeigneterweise schräg auf die Nut auftreffende Strahlungsfeld beleuchtet die Nut jeweils in einem schmalen, linienförmigen Bereich, den sogenannten Lichtschnitt, an dem das Licht reflektiert wird. Die Lichtebene des Lichtschnitts ist ideaierweise nur um die Drehachse des Systems gedreht. Das an der Nut reflektierte Licht fällt auf eine geeignet positionierte optische Abbildungseinheit, die vorzugsweise weitgehend zentrisch zur der Brillenfassungsöffnung angeordnet ist und das Licht auf die CCD-Matrixkamera umlenkt.

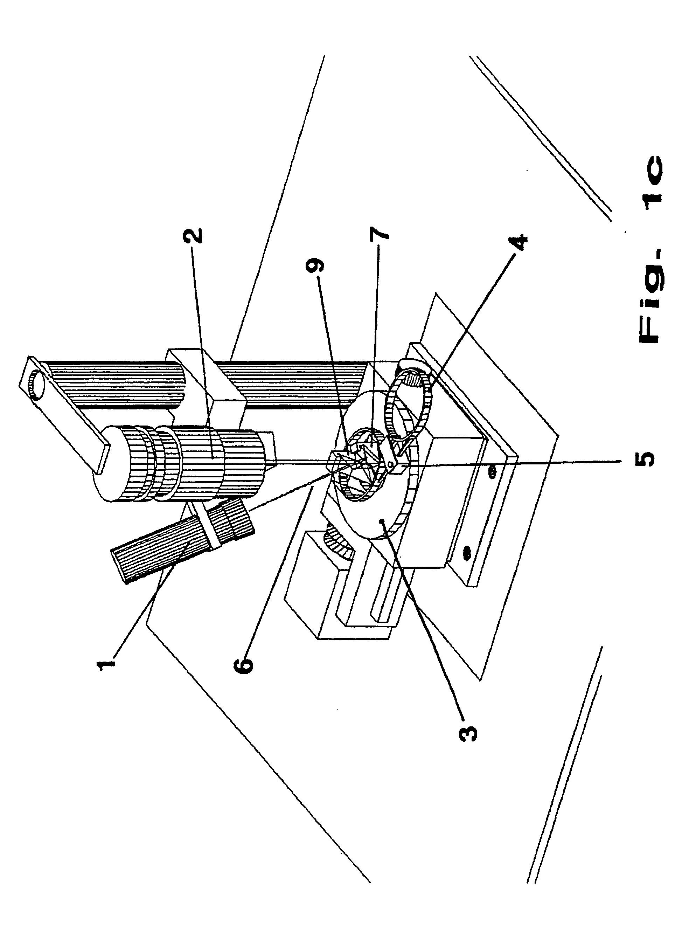

Das mit diesem Meßaufbau durchführbare Lichtschnittverfahren nutzt das Prinzip der Triangulation, das in Verbindung mit Figur 2 kurz erläutert wird. Eine Laserquelle L projiziert eine Lichtlinie auf die zu vermessende Brillenkontur, die in der Figur 2 als allgemeines Meßobjekt M dargestellt ist. Die Reflexion der Lichtlinie wird von einer CCD-Matrixkamera CCD, die in einem Triangulationswinkel $\gamma$ relativ zum Laser angebracht ist, detektiert.

Über die der Triangulation zugrundeliegende Beziehung,

$$\Delta x = \frac{b}{z} \sin \gamma \cdot \Delta z$$

mit:

$\Delta x$ relativer Abstand zweier Nutpunkte in der Detektorebene
$\Delta z$ relativer Abstand zweier Nutpunkte auf der realen Nutkontur
$b/z$ Abbildungsmasstab
$z$ Objektabstand zwischen dem sogenannten Arbeitspunkt A und Nut
$\gamma$ Triangulationswinkel

sind auf der Grundlage des auf die Bildebene der CCD-Matrixkamera projizierten Lichtschnitts durch die Brillenfassungsnut die realen Abstände einzelner auf der Nut befindlicher Ortspunkte zu ermitteln.

Bei der Durchführung nur eines einzigen Lichtschnittes wird eine 2-dimensionale Bildaufnahme des Nutprofils, das durch das linienförmige Strahlungsfeld beleuchtet worden ist, erhalten.

Zur Vermessung einer 3-dimensionalen Raumform der gesamten Nut ist eine Relativbewegung zwischen dem Lichtschnittsensor, d.h. der Lichtquelle und Detektoranordnung mit optischen Abbildungssystemen, und dem Messkörper, d.h. die Brillenfassungsnut, notwendig. Dazu wird entweder die Brillenfassung oder aber der beschriebene Messaufbau nach jeder Messaufnahme um eine Rotationsachse mit einem definierten Winkel gedreht, der zur Rekonstruktion der Brillenkontur neben der Lage der Rotationsachse bekannt sein muß.

Kurze Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen hinsichtlich der Offenbarung aller im Text nicht näher erläuterten erfindungsgemäßen Einzelheiten ausdrücklich verwiesen wird. Es zeigen:

Fig. 1a      Messaufbau,
Fig. 1b      Detaildarstellung zur Anordnung des optischen Abbildungssystems,
Fig. 1c      Variante eines Messaufbaus,
Fig. 2      Triangulationsprinzip,
Fig. 3a      Aufnahme einer Nutkontur an Metall-Fassung,
Fig. 3b      Aufnahme einer Nutkontur an Kunststoff-Fassung
Fig. 4a-d      Reflexionsarten,
Fig. 5      Brillenfassung mit V-Nut,
Fig. 6      Polynom 4. Grades
Fig. 7      Darstellung der Brillenfassungsnut in Weltkoordinaten und
Fig. 8      schematisierte Darstellung zum Lichtschnittverfahren mit Lichtebene.

Beschreibung von Ausführungsbeispielen

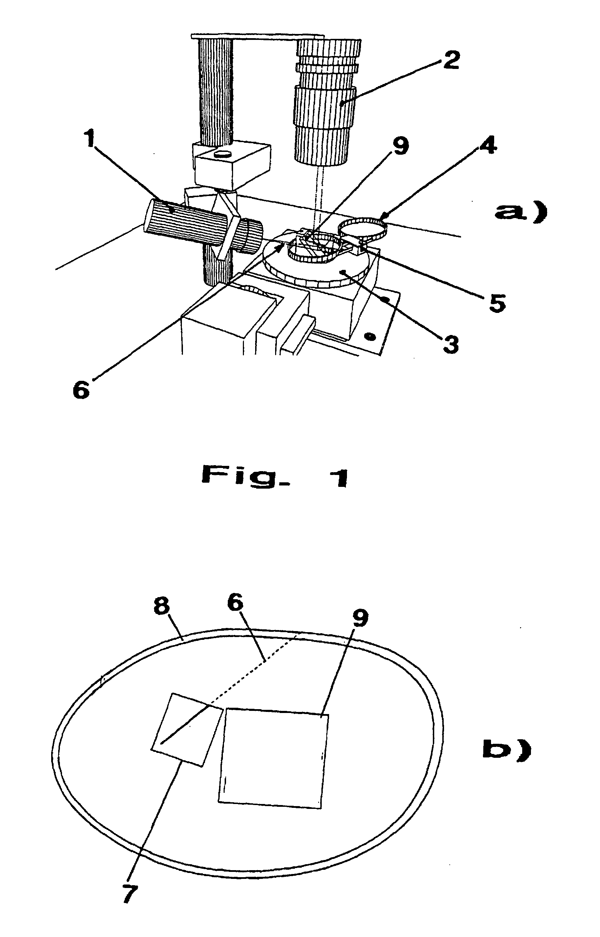

In Figur 1a ist eine vorteilhafte Ausführungsform eines erfindungsgemäßen Meßaufbaus dargestellt, mit einer Lichtquelle 1, einer Detektoreinheit 2 sowie einer Haltevorrichtung 3, die als Drehtisch ausgebildet ist. Auf der Haltevorrichtung 3 ist eine Brillenfassung 4 mittels einer Fixiervorrichtung 5 angebracht, so daß die Innenseite der Brillennut für den Lichtstrahl 6 frei zugänglich ist. In der gezeigten Ausführungsform ist die als Laser ausgeführte Lichtquelle 1 schräg zur Brillenfassungsöffnung angeordnet, wodurch der Lichtstrahl 6 unter schrägem Einfall direkt auf die Nutinnenseite der Brillenfassung 4 einfällt. Natürlich sind auch andere Anordnungen für die Lichtquelle 1 denkbar. So kann beispielsweise gemäß Figur 1b der Lichtstrahl 6 zunächst auf ein optisches Umlenksystem 7 justiert sein, das den Strahl auf die Brillenfassungsnut 8 umlenkt. Ein getrenntes Abbildungssystem 9 lenkt das von der Nut 8 reflektierte bzw. gestreute Licht zu einer nicht in der Figur 1 b dargestellten Detektoreinheit weiter. In Figur 1c ist ein diesbezüglicher, in perspektivischer Darstellung gezeigter Meßaufbau zu sehen, mit Bezugszeichen, die den eingeführten gleichen und deshalb nicht nochmals erklärt werden.

Auch sind Anordnungen denkbar, in denen das Umlenksystem 7 und das Abbildungssystem 9 als eine einzige Einheit ausgebildet sind. Hierzu muß jedoch die reflektierende Fläche des Abbildungssystems genügend groß sein, so daß sowohl der Lichtstrahl 6 als auch das reflektierte Abbild der Nut von dem Abbildungssystem erfaßt und entsprechend umgelenkt werden kann. Besonders geeignet sind hochreflektierende Flächen oder 90°-Umlenkprismen.

In der beschriebenen Vorrichtung wird wie bereits erwähnt Laserlicht zur Projektion genutzt. Die Verwendung von Laserlicht hat wesentliche Vorteile, so z.B. eine höhere Lichtleistungsdichte, eine bessere Fokussierbarkeit sowie die Möglichkeit der Ausblendung des Umgebungslichtes durch einen Interferenzfilter.
Die optischen Umlenk- bzw. Abbildungssysteme sind kinematisch von der sich drehenden Haltevorrichtung abgekoppelt und befinden sich in Ruhe. Auf diese Weise ist gewährleistet, daß die sich relativ zum Strahlengang drehende Nut der Brillenfassung vollständig beleuchtet wird.

Der Lichtstrahl 6 ist linienförmig ausgebildet und weist zur Erhöhung der Beleuchtungsstärke und damit verbunden zur Erhöhung der Bildauflösung eine möglichst geringe Strahldivergenz auf. Da insbesondere moderne Brillenfassungen eine beträchtliche Durchbiegung senkrecht zur Ebene der durch die umlaufende Brillennut einbeschriebenen Fläche aufweisen, ist zusätzlich dafür Sorge zu tragen, daß der Lichtstrahl dem vertikalen Durchbiegung der Brillenfassung folgt. Hierfür ist ein nicht in der Figur 1 a dargestellter Sensor vorzusehen, der den Verlauf der Brillenfassung erfaßt und den Lichtstrahl entsprechend nachführt. Dies erfolgt am einfachsten über eine motorische Ansteuerung des Umlenksystems.

In einer ebenso nicht in der Figur 1a dargestellten Auswerteeinheit erfolgt die Auswertung der von der Detektoreinheit aufgenommenen Abbilder der einzelnen Schnittaufnahmen der Brillenfassungsnut. Beispiele für Abbilder einer Nut sind in den Figuren 3a und 3b dargestellt. In Figur 3a ist ein Schnittbild durch eine Metallfassung, in Figur 3b ein Schnittbild durch eine Brillenfassung aus Kunststoff abgebildet. Der jeweils eingerandete Bereich soll den auswertbaren Schnittbereich für jede einzelne Schnittbildaufnahme darstellen.

Nachfolgend wird das Schnittbild bzw. die Schnittlinie zwischen Brillenfasssung und Licht- bzw. Laserebene als Konturschnittlinie bezeichnet. Die dargestellten Messaufnahmen von Brillen aus Metall und Kunststoff haben gezeigt, daß eine differenzierte Bildauswertung notwendig ist, aufgrund der unterschiedlichen Reflexionseigenschaften der verschiedenen technischen Oberflächen.

Die Konturschnittlinienform ist jedoch prinzipiell bei beiden Materialien gleich, wie es aus den Figuren 3 a und 3 b hervorgeht, aus denen die Nutkontur andeutungsweise zu erkennen ist (siehe jeweils die Pfeile).

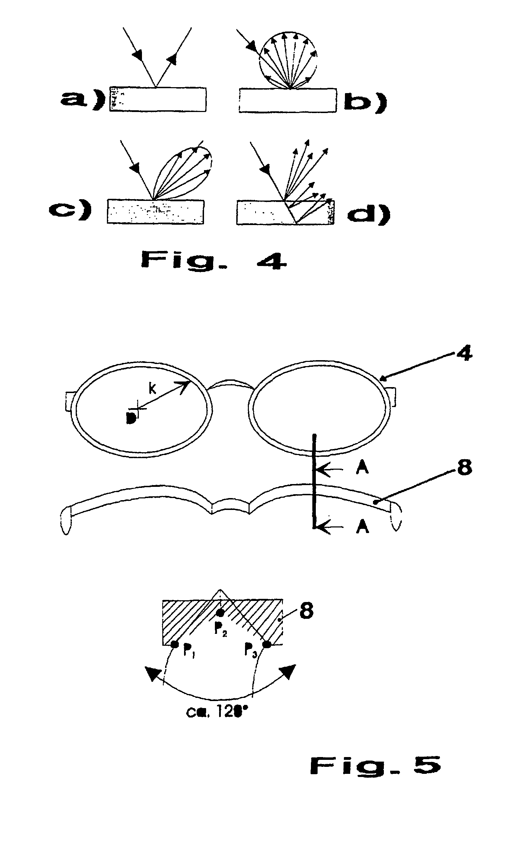

Zur Verdeutlichung der Reflexionsereignisse auf der Nutoberfläche sollen die nachfolgenden Figuren 4 a-d dienen.

Figur 4a zeigt ein Objekt mit spiegelnder Oberfläche. Der einfallende Lichtstrahl wird gerichtet reflektiert. Die Reflexionsrichtung hängt von der relativen Orientierung des Lichtes zur Oberfläche ab. Die Detektion des Lichtes ist problematisch, da der Lichtstrahl die Apertur der Messkamera nur in einem sehr kleinen Messbereich trifft. Figur 4b zeigt den Idealfall, eine gleichförmige Streuung des Lichts. Die Strahlleistung wird in alle Raumrichtungen gleichmässig gestreut. Figur 4c zeigt den für die Messung auf metallischen Oberflächen relevanten Fall, einer in die gedachte Reflexionsrichtung ausgerichtete Strahlkeule. Die Winkelhalbwertsbreite dieser Strahlkeule ist von der Oberflächenstruktur des Objekts abhängig. Je rauher eine Oberfläche ist desto breiter wird die Strahlkeule. In Figur 4d dringt der Lichtstrahl in das Material ein. Dieser Fall tritt bei Kunststoffmaterialien auf. Das Licht wird im Bereich der Eindringtiefe gestreut. Eine Auswertung ist möglich, wie Figur 3b zeigt.

Nach jeder Aufnahme des jeweiligen Messbildes müssen die Konturpunkte je nach Material für die Weiterverarbeitung vorbereitet werden. Für die verschiedenen Materialien wird das Messfenster zeilenweise nach Intensitäts-Flanken durchsucht. Werden in einer Zeile genau zwei Flanken $Fl_1(z)$ und $Fl_2(z)$ gefunden, so wird $F_M(z)$ gebildet und zur Weiterverarbeitung gespeichert.

$$F_M = \frac{k_{M1}Fl_1(z) + k_{M2}Fl_2(z)}{2}$$

Für metallisch reflektierende Materialien betragen die Faktoren $k_{M1} \approx 1$ und $k_{M2} \approx 1$. Bei Kunststoffoberflächen werden ebenfalls zwei Flanken pro Bildzeile gesucht. Allerdings betragen die Faktoren $k_{M1} \approx 2$ und $k_{M2} \approx 0$. Die exakten Werte für $k_{M1}$ und $k_{M2}$ sind materialspezifisch, vom Reflexions- und Absorbtionsgrad des Brillengestells abhängig. Sie können zur Erhöhung der Messgenauigkeit empirisch ermittelt werden. Erst durch diese differenzierte Verarbeitung der verschiedenen Materialien kann eine robuste Vermessung realisiert werden. Diese Art der Verarbeitung stellt ebenfalls eine Verbesserung gegenüber herkömmlichen Verarbeitungsalgorithmen dar.
Die abgespeicherten Informationen ergeben ein Binärbild. Aus diesem Bild muß im nächsten Schritt die vollständige Schnittkontur extrahiert werden.

Die nachfolgenden Betrachtungen gehen von der Voraussetzung aus, daß die Brillenfassungsnut einer V-Form ähnelt bzw. durch eine Polynomfunktion 4.Grades beschreibbar ist. Dies ist in Figur 5 dargestellt. Die Brillenfassung 4 wird mit dem obenbeschriebenen Lichtschnittverfahren für eine Messaufnahme entlang des Schnittes A-A beleuchtet. Die Nut 8, die in der Figur in Querschnittsdarstellung gezeigt ist, weist idealisiert einen V-förmigen Querschnitt auf, der durch die Punkt $P_1$, $P_2$ und $P_3$ beschreibbar ist. $P_1$ und $P_3$ kennzeichnen die Nutkanten und $P_2$ definiert den Nutboden. Die V-Nut weist im gezeigten Beispiel einen Öffnungswinkel von typischerweise 120° auf.

Es hat sich gezeigt, daß zur vollständigen Beschreibung der Konturschnittlinie im wesentlichen nur drei Messpunkte benötigt werden. Zur Messpunktextraktion werden aus den Punkte $P_1$, $P_2$, $P_3$ eine Polynomfunktion vierten Grades regressiert. Die Schnittkontur kann durch ein Polynom 4. Grades optimal nachgebildet werden.

$$p_i = a_0 + a_1 x_i + a_2 x_i^2 + a_3 x_i^3 + a_4 x_i^4$$

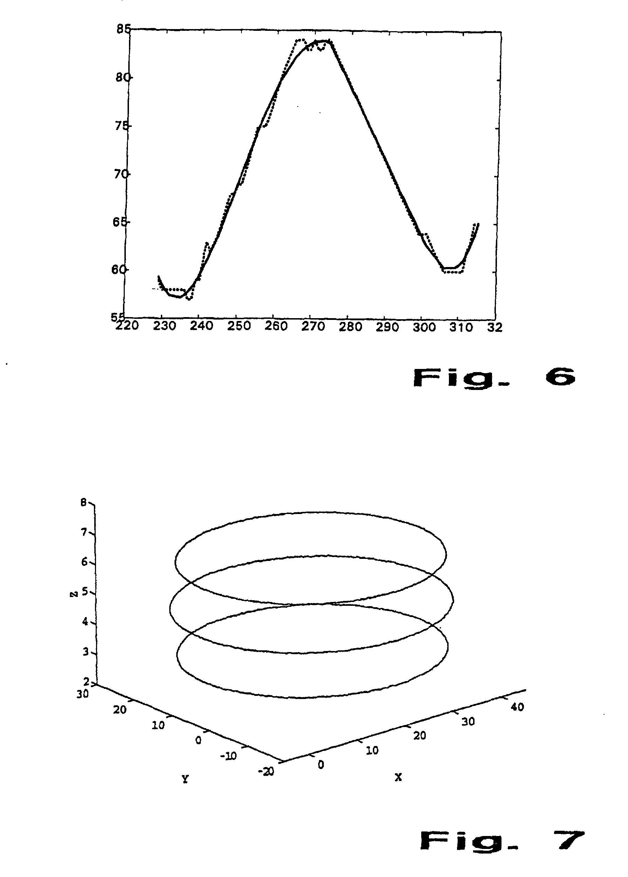

Unter Zugrundelegen der Gaussmethode der kleinsten Fehlerquadrate kann unter Verwendung der drei vorstehend beschriebenen Extremwerte eine Polynomfunktion regressiert werden, die dem tatsächlich gemessenen Meßprofil sehr gut entspricht. In Figur 6 ist ein berechneter Polynomzug (durchgezogenen Linie) über ein gemessenes Profil (gepunktete Linie) gelegt. Die Abszisse gibt die Zeilen, die Ordinate die Spaltenzahlen an.

Die Regression wird vorzugsweise in vier Iterationsschritten durchgeführt. Während der ersten Iteration wird über alle gefundenen Konturpunkte regressiert. Deutlich treten gestörte Konturpunkte auf, die durch auftretende Reflexionen bedingt sind und entfernt werden müssen, um eine genau Regression vornehmen zu können. Im zweiten Iterationsschritt wird über die restlichen Meßwerte regressiert. Vier Iterationen sind notwendig um eine stabile Regression zu erhalten.

Um die beabsichtigten 3-dimensionale Raumform der Brillenfassungsnut ermitteln zu können, muß der Meßaufbau und insbesondere die Lichtquelle und Detektoreinheit selber kalibriert werden. Die relative Lage der CCD-Kamera und des Lasers wird durch Kalibrierparameter beschrieben. Anhand der bekannten Parameter können dann 3D-Messobjektkoordinaten durch eine Transformation der extrahierten 2D-Bildkoordinaten berechnet werden. Zusätzlich müssen, um Messungen mit erhöhter Genauigkeit vornehmen zu können, auch mögliche Abweichungen des Sensors und des Messaufbaus von einem Idealzustand bestimmt werden.

Die Transformation von Sensorkoordinaten in Weltkoordinaten ist nicht eindeutig, da erst durch die Nutzung der Laserebene für jeden auf dem Sensor der CCD-Matrixkamera abgebildeten Punkt die Weltkoordinaten berechnet werden können. Die Transformation der geräteabhängigen Bildkoordinaten in Weltkoordinaten umfaßt folgende Schritte:

1. Berechnung der verzerrten Bildkoordinaten
2. Berechnung der unverzerrten Bildkoordinaten
3. Berechnung zweier Punkte $P_1(x_{w1}, y_{w1}, z_{w1})$ und $P_2(x_{w2}, y_{w2}, z_{w2})$, die auf dem Abbildungsstrahl, des Bildpunktes liegen durch die Vorgabe zweier beliebiger $z_w$-Werte.
4. Berechnung des Schnittpunktes der Laserebene mit dem Abbildungsstrahl

Schließlich stellt der Schnittpunkt zwischen Laserebene und Abbildungsstrahl den gesuchten Konturpunkt im Weltkoordinatensystem dar.

Zur Durchführung der nachstehenden Transformation sind folgende spezifische Parameter der Messkamera während der Kamerakalibrierung zu ermitteln.

$(c_x, c_y)$                    Ursprung des Bildkoordinatensystems

$$d'_x = d_x \frac{N_{cx}}{N_{fx}}$$  Abstand benachbarter Pixel in einer Bildzeile

$d_x$  Abstand benachbarter Sensorelemente in x-Richtung

$d_y$  Abstand benachbarter Sensorelemente in y-Richtung

$N_{cx}$  Anzahl der Sensorelemente in x-Richtung

$N_{fx}$  Anzahl der Pixel in einer Bildzeile

Ausgehend von den im Bildkoordinatensystem der Sensorebene der Detektoreinheit extrahierten Koordinaten $(x_f, y_f)$, die Extremwerten, bspw. $P_1$, entsprechen, werden sogenannte "verzerrte" Bildkoordinaten $x_d$ und $y_d$ berechnet.

$$x_d = \frac{(x_f - c_x) \cdot d'_x}{s_x}, \; y_d = (y_f - c_y) \cdot d_y$$

"Verzerrt" bedeutet im vorstehenden Sinn, daß der Sensor durch falsche Chipgeometrie von einem idealen Model abweicht. Diese Abweichungen werden durch eine Kalibrierung geeignet beschrieben und reduziert und führt zu den "unverzerrten" Koordinaten $(x_u, y_u)$:

$$x_u = x_d(1 + \kappa_1(x_d^2 + y_d^2)), \; y_u = y_d(1 + \kappa_1(x_d^2 + y_d^2))$$

Durch die erfolgte Kalibrierung kann eine Rotationsmatrix R sowie ein Translationsvektor T berechnet werden. Durch R und T ist die räumliche Lage der Detektoreinheit in einem Weltkoordinatensystem festgelegt. Jeder Punkt auf der Detektorebene bzw. dem Chip entspricht daher einem Abbildungstrahl. Mathematisch ist dieser Abbidungsstrahl durch die nachfolgenden Gleichungen beschreibbar:

$$x_w = \frac{((r_2 r_9 - r_3 r_8)y_u + (r_6 r_8 - r_5 r_9)x_u - cr_2 r_6 + cr_3 r_5)z_w}{((r_1 r_8 - r_2 r_7)y_u + (r_5 r_7 - r_4 r_8)x_u - cr_1 r_5 + cr_2 r_4}$$
$$+ \frac{(r_2 T_z - r_8 T_x)y_u + (r_8 T_y - r_5 T_z)x_u - cr_2 T_y + cr_5 T_x}{((r_1 r_8 - r_2 r_7)y_u + (r_5 r_7 - r_4 r_8)x_u - cr_1 r_5 + cr_2 r_4};$$

$$y_w = \frac{((r_1 r_9 - r_3 r_7)y_u + (r_6 r_7 - r_4 r_9)x_u - cr_1 r_6 + cr_3 r_4)z_w}{((r_1 r_8 - r_2 r_7)y_u + (r_5 r_7 - r_4 r_8)x_u - cr_1 r_5 + cr_2 r_4}$$
$$+ \frac{(r_1 T_z - r_7 T_x)y_u + (r_7 T_y - r_4 T_z)x_u - cr_1 T_y + cr_4 T_x}{((r_1 r_8 - r_2 r_7)y_u + (r_5 r_7 - r_4 r_8)x_u - cr_1 r_5 + cr_2 r_4}$$

Erst der Schnittpunkt dieses Abbildungsstrahls mit der Laserebene bestimmt eine Höhenkoordinate. Der Schnittpunkt läßt sich mit Hilfe der nachstehenden Gleichung berechnen:

$$\begin{pmatrix} x_a \\ y_a \\ z_a \end{pmatrix} = \begin{pmatrix} x_{w1} \\ y_{w1} \\ z_{w1} \end{pmatrix} + t \begin{pmatrix} x_{w2} - x_{w1} \\ y_{w2} - y_{w1} \\ z_{w2} - z_{w1} \end{pmatrix}$$

$$t = \frac{-(a_1 x_{w1} + b_1 y_{w1} + c_1 z_{w1} + d_1)}{a_1(x_{w2} - x_{w1}) + b_1(x_{w2} - x_{w1}) + c_1(x_{w2} - x_{w1})}$$

Die Parameter mit dem Index L bestimmen die Laserebene. Um den obenstehenden Formalismus zu vereinfachen wurden zunächst zwei beliebige Werte für $z_w$ eingesetzt, so daß man zwei Punkte auf dem Abbildungsstrahl erhält, die eine Gerade bestimmen. Der Parameter t bestimmt dabei den Schnittpunkt der Laserebene mit dem Abbildungsstrahl.

Zur Darstellung der 3-dimensionalen Raumform der gesamten Brillenfassungsnut ist es jedoch erforderlich alle ermittelten Konturschnittlinien zusammenzusetzen.

Bekannt sind nun die Messreihen der einzelnen Konturpunkte $P_1$, $P_2$ und $P_3$, die Lage der Drehachse im Weltkoordinatensystem sowie der jeweilige Rotationswinkel von z.B. 0,1°. Es wird festgelegt, daß sich das erste Messpunkttripel bei 0° befindet. Jedes folgende Tripel wird um 0,1° weiter verdreht:

$$x_{kw} = x_w \cos \beta - y_w \sin \beta$$

$$y_{kw} = -x_w \sin \beta + y_w \cos \beta$$

$z_{kw} = z_w$
$\beta = 0°, 0.1°, 0.2°, ..., 360°$

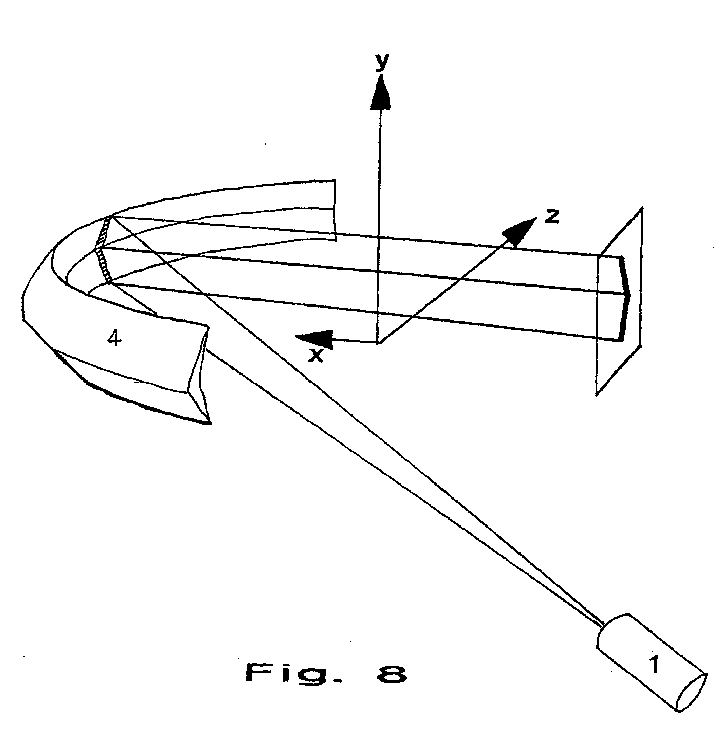

Die so gewonnenen Messwerte werden als Ergebnisse der Innenkonturvermessung abgespeichert und ergeben die 3-dimensionale Raumform der Brillenfassungsnut, wie in einer 3-D-Graphik gemäß Figur 7 durch drei Raumkurven dargestellt ist.

In Figur 8 ist nochmals eine Schemazeichnung für den Meßaufbau zur Anwendung des Triangulationsprinzip dargestellt. Die Lichtquelle 1 beleuchtet die Brillenfassung 3 mit einem linienförmigen Strahlenfeld, das an der Brillenfassung 3 reflektiert wird. Die Lichtebene stellt idealerweise eine YZ-Ebene dar, die lediglich um die Drehachse (hier die y-Achse) gedreht wird. Gegebenenfalls kann die Lichtebene auch um alle 3 Translationsrichtungen verschoben werden, wodurch die Lichtebene einen dominaten Triangulationswinkel zur YZ-Ebene aufspannt.

## BEZUGSZEICHENLISTE

| | |
|---|---|
| 1 | Lichtquelle |
| 2 | Detektoreinheit |
| 3 | Haltevorrichtung, Drehtisch |
| 4 | Brillenfassung |
| 5 | Fixiervorrichtung |
| 6 | Lichtstrahl |
| 7 | Umlenksystem |
| 8 | Brillenfassungsnut |
| 9 | Abbildungssystem |
| L | Laserquelle |
| M | Meßobjekt |

**Patentansprüche**

1. Meßanordnung zum berührungslosen Erfassen der 3-dimensionalen Raumform einer in einer Brillenfassung (4) umlaufenden Nut (8) mit einer Lichtquelle (1), deren Lichtstrahl (6) auf die Nut (8) gerichtet ist,
einem optischen Abbildungssystem (9), das das an der Nut (8) reflektierte Licht auf eine optische Detektoreinheit (2) abbildet und weitgehend zentrisch zu der zu vermessenden Nut (8) der Brillenfassung (4) angeordnet ist,
einer die Brillenfassung (4) tragenden Haltevorrichtung (8) die relativ zu der Lichtquelle (1) der Detektoranordnung (2) sowie dem optischen Abbildungssystem (9) um eine Zentrierachse einer, von der umlaufenden Nut (8) der Brillenfassung (4) einbeschriebenen Fläche drehbar gelagert ist sowie
einer Auswerteeinheit zur Ermittlung der 3-dimensionalen Raumform der Nut (8),
**dadurch gekennzeichnet, daß** die Lichtquelle (1) die Nut (8) mit einem einzigen, linienförmig ausgebildeten Strahl in einem linienförmigen Bereich beleuchtet, daß ein optisches Umlenksystem (7) vorgesehen ist, das den Lichtstrahl (6) von der Lichtquelle (1) derart auf die Nut (8) ablenkt, daß der linienförmige Strahl weitgehend senkrecht auf die von der umlaufenden Nut (8) der Brillenfassung (4) einbeschriebenen Fläche gerichtet ist, und daß die Lichtquelle (1) und die Detektoranordnung (2) relativ zu der zu vermessenden Nut (8) einen fest vorgebbaren Triangulationswinkel einschließen, so daß die Anwendung des Lichtschnittverfahrens zur Ermittlung der 3-dimensionalen Raumform der Nut (8) möglich ist.

2. Meßanordnung nach Anspruch 1,
**dadurch gekennzeichnet, daß** die Lichtquelle (1) ein Laser ist.

3. Meßanordnung nach Anspruch 1 oder 2,
**dadurch gekennzeichnet, daß** das optische Umlenksystem (7) und das optische Abbildungssystem (9) als eine Einheit ausgebildet sind.

4. Meßanordnung nach Anspruch 3,
**dadurch gekennzeichnet, daß** die Einheit ein 90°-Umlenkprisma oder ein Spiegel ist

5. Meßanordnung nach einem der Ansprüche 1 bis 4,
**dadurch gekennzeichnet, daß** die Lichtquelle (1) und die Detektoreinheit (2) nebeneinander angeordnet sind und der Lichtstrahl (6) der Lichtquelle (1) weitgehend senkrecht auf die von der umlaufenden Nut (8) der Brillenfassung (4) einbeschriebenen Fläche gerichtet ist und vom optischen Umlenksystem (7) auf die Nut (8) ablenkbar ist.

6. Meßanordnung nach einem der Ansprüche 1 bis 5,
**dadurch gekennzeichnet, daß** das optische Umlenksystem (7) derart orientiert ist, daß der Lichtstrahl (6) schräg auf die Nut (8), vorzugsweise unter einem Winkel von 45° auftrifft.

7. Meßanordnung nach einem der Ansprüche 1 bis 6,
**dadurch gekennzeichnet, daß** die Haltevorrichtung (3) ein Drehtisch ist.

8. Meßanordnung nach einem der Ansprüche 1 bis 7,
**dadurch gekennzeichnet, daß** das optische Abbildungssystem (9) in der Ebene der von der umlaufenden Nut (8) der Brillenfassung (4) einbeschriebenen Fläche angeordnet ist und relativ zur drehbeweglichen Brillenfassung (4) ruht.

9. Meßanordnung nach einem der Ansprüche 1 bis 8,
**dadurch gekennzeichnet daß** die Haltevorrichtung (3) eine Justiervorrichtung vorsieht, so daß die Brillenfassung (4) relativ zum optischen Abbildungssystem (9) derart ausrichtbar ist, daß das Abbildungssystem (9) relativ zur umlaufenden Nut (8) weitgehend zentriert ist.

10. Meßanordnung nach einem der Ansprüche 1 bis 9,
**dadurch gekennzeichnet, daß** die Detektoreinheit (2) eine CCD-Messkamera ist.

11. Meßanordnung nach Anspruch 10,
**dadurch gekennzeichnet, daß** die CCD-Messkamera eine Matrixkamera ist, die in Zeilen und Spalten angeordnetes Lichtsensoren aufweist.

12. Meßanordnung nach einem der Ansprüche 1 bis 11,
**dadurch gekennzeichnet, daß** die Haltevorrichtung (3) relativ zur Lichtquelle (1), zum optischen Abbildungssystem (9) sowie zur Detektoreinheit (2) taktweise jeweils um einen definierten Winkel verdrehbar ist.

13. Meßanordnung nach einem der Ansprüche 1 bis 12,
**dadurch gekennzeichnet, daß** die Auswerteeinheit zu jeder Stellung der Brillenfassung (4) relativ zum Lichtstrahl (6) den Drehwinkel der Haltevorrichtung (3) erfaßt und das an der Nut (8) reflektierte Licht für jede Verdrehstellung auswertet.

14. Meßanordnung nach einem der Ansprüche 1 bis 13,
**dadurch gekennzeichnet, daß** die Haltevorrichtung (3) oder das optische Umlenk- und Abbildungssystem (7, 9) senkrecht zu der, durch den Nutverlauf einbeschriebenen Fläche verfahrbar ist.

15. Meßanordnung nach Anspruch 14,
**dadurch gekennzeichnet, daß** eine Sensoreinrichtung vorgesehen ist, die die horizontale Ausrichtung zwischen den auf die Nut (8) gerichteten Lichtstrahl (6) und der Nut (8) erfaßt, und daß eine Regeleinheit vorgesehen ist, die den auf die Nut (8) gerichteten Lichtstrahl (6) relativ zur Nut (8) ausrichtet.

16. Verfahren zum berührungslosen Erfassen der 3-dimensionalen Raumform einer in einer Brillenfassung (4) umlaufenden Nut (8), die zwei parallel verlaufende Nutkanten sowie einen Nutboden aufweist, bei dem

- die Nut (8) mit einem einzigen linienförmigen Strahl (6) in einem linienförmigen Bereich beleuchtet wird,
- die an der Nut (8) reflektierte Strahlung mit einer ortsauflösenden Detektoreinheit (2) detektiert wird,
- die räumliche Lage von Bereichen auf der Detektoreinheit (2), die jeweils dem Abbild der Nutkanten sowie dem Nutboden entsprechen, erfasst wird,
- die Raumkoordinaten beider Nutkanten sowie dem Nutboden unter Zugrundelegen des Lichtschnittverfahrens ermittelt werden,
- eine Polynomkurve zur Darstellung eines Schnittprofils der Nut (8) im beleuchteten linienförmigen Bereich regressiert wird,
- bei dem der linienförmige Strahl (6) relativ zur Nut (8) schrittweise verfahren wird, bis weitgehend alle Bereiche der Nut (8) in der vorstehenden Weise erfaßt sind, und
- alle ermittelten Schnittprofile zu einer 3-dimensionalen Raumform der Nut (8) zusammengeführt werden.

17. Verfahren nach Anspruch 16,
**dadurch gekennzeichnet, daß** die relative räumliche Lage zwischen Detektoreinheit (2) und Lichtquelle (1) so bestimmt wird, daß ein vorgebbarer Triangulationswinkel $\gamma$ von einem auf die Nut (8) eintreffenden Lichtstrahl (6) sowie einem an der Nut (8) reflektierten Lichtstrahl einbeschrieben wird.

18. Verfahren nach Anspruch 16 oder 17,
**dadurch gekennzeichnet, daß** zur Ermittlung der Raumkoordinaten der Nutkanten sowie Nutboden das Abbild eines Lichtschnittes durch die Nut (8) auf der Detektoreinheit (2) bestimmt wird, für das nach dem Lichtschnittverfahren folgender Zusammenhang gilt:

$$\Delta x = \frac{b}{z} \sin \gamma \cdot \Delta z$$

mit:

$\Delta x$  relativer Abstand zweier Nutpunkte in der Detektorebene
$\Delta z$  relativer Abstand zweier Nutpunkte auf der realen Nutkontur
$b/z$  Abbildungsmasstab
$z$  Objektabstand zwischen Lichtquelle und Nut
$\gamma$  Triangulationswinkel.

19. Verfahren nach einem der Ansprüche 16 bis 18,
**dadurch gekennzeichnet, daß** das von der ortsauflösenden Detektoreinheit (2) aufgenommene Abbild des von dem linienförmigen Strahlungsfeld beleuchteten Nutabschnittes derart zeilenweise ausgewertet wird, daß jede Detektorzeile nach Intensitätsflanken durchsucht wird.

20. Verfahren nach Anspruch 19,
**dadurch gekennzeichnet, daß** bei zwei in einer Detektorzeile aufgefundenen Intensitätsflanken $FI_1(z)$ und $FI_2(z)$ ein Mittelwert $F_M$ nach folgender Beziehung gebildet wird:

$$F_M = \frac{k_{M1}FI_1(z) + k_{M2}FI_2(z)}{2}$$

mit:

$k_{M1}, k_{M2}$  materialspezifische, vom Refelexions- und Absorptionsgrad abhängige Faktoren; $k_{M1} \approx 1$ und $k_{M2} \approx 1$ bei metallischen Brillenfassungen, $k_{M1} \approx 2$ und $k_{M2} \approx 0$ bei Kunststoffbrillenfassungen.

21. Verfahren nach Anspruch 20,

**dadurch gekennzeichnet, daß** aus allen Mittelwerten F$_M$ eines Schnittprofils der Nut (8) jeweils die Mittelwerte ausgewählt werden, die den beiden sich gegenüberliegenden Nutkanten sowie dem Nutboden entsprechen.

22. Verfahren nach Anspruch 21,
    **dadurch gekennzeichnet, daß** die auf die Detektorebene bezogenen Koordinaten der Abbilder der Nutkanten und des Nutbodens mittels Koordinatentransformation unter Berücksichtigung von Verzerrungen bedingt durch herstellungsbedingte Detektorabweichungen in 3-dimensionale Raumkoordianten umgerechnet werden.

23. Verfahren nach einem der Ansprüche 16 bis 22,
    **dadurch gekennzeichnet, daß** zu den ermittelten Raumkoordinaten der beiden Nutkanten sowie dem Nutboden eine Polynomfunktion vierten Grades regressiert wird.

**Claims**

1. Measuring device for non-contacting determination of the three-dimensional shape of a peripheral groove (8) in a spectacle frame (4), comprising

    - a light source (1) whose light beam (6) is directed onto said groove (8),
    - an optical imaging system (9) that projects the light reflected at said groove (8) onto an optical detector unit (2) and that is disposed largely centrally relative to said groove (8) to be measured on said spectacle frame (2),
    - a holding means (3) supporting said spectacle frame (4), which is supported for rotation about a centring axis of a surface inscribed by said peripheral groove (8) of said spectacle frame (4), relative to said light source (1) of said detector system (2) as well as relative to said optical imaging system (9), as well as
    - an analyser unit for determining said three-dimensional shape of said groove (8),

    **characterised in that** said light source (1) illuminates said groove (8) with a single beam of linear configuration within a line-shaped region,
    that an optical path-folding system (7) is provided that folds said light beam (6) from said light source (1) onto said groove (8) in such a way that said line-shaped beam is directed in a largely orthogonal direction onto said area inscribed by said peripheral groove (8) of said spectacle frame (4), and
    that said light source (1) and said detector system (2) enclose an invariably determinable triangulation angle relative to said groove (8) to be measured so as to permit the application of the split-beam method for determining the three-dimensional shape of said groove (8).

2. Measuring device according to Claim 1,
    **characterised in that** said light source (1) is a laser.

3. Measuring device according to Claim 1 or 2,
    **characterised in that** said optical path-folding system (7) and said optical imaging system (9) are configured as a single unit.

4. Measuring device according to Claim 3,
    **characterised in that** said unit is a 90° reflecting prism or a mirror.

5. Measuring device according to Claim 1,
    **characterised in that** said light source (1) and said detector unit (2) are disposed in a side-by-side relationship and that said light beam (6) from said light source (1) is directed in a largely orthogonal direction onto the area inscribed by said peripheral groove (8) of said spectacle frame (4) and can be folded by said optical path-folding system (7) onto said groove (8).

6. Measuring device according to any of the Claims 1 to 6,
    **characterised in that** said optical path-folding system (7) is so oriented that said light beam (6) is incident on said groove (8) preferably at an angle of 45°.

7. Measuring device according to any of the Claims 1 to 6,
    **characterised in that** said holding means (3) is a turntable.

**8.** Measuring device according to any of the Claims 1 to 7,
**characterised in that** said optical path-folding system (9) is disposed in the plane of the area inscribed by said peripheral groove (8) of said spectacle frame (4) and rests relative to said spectacle frame (4) mobile for rotation.

**9.** Measuring device according to any of the Claims 1 to 8,
**characterised in that** said holding means (3) provides for an adjusting device so that said spectacle frame (4) can be oriented relative to said optical imaging system (9) in such a way that said imaging system (9) is largely centred relative to said peripheral groove (8).

**10.** Measuring device according to any of the Claims 1 to 9,
**characterised in that** said detector unit (2) is a CCD measuring camera.

**11.** Measuring device according to Claim 10,
**characterised in that** said CCD measuring camera is a matrix camera comprising light sensors disposed in lines and columns.

**12.** Measuring device according to any of the Claims 1 to 11,
**characterised in that** said holding means (3) is disposed for rotation relative to said light source (1), relative to said optical imaging system (9) as well as relative to said detector unit (2) in cycles through a respective defined angle.

**13.** Measuring device according to any of the Claims 1 to 12,
**characterised in that** said analyser unit detects the angle of rotation of said holding means (3) for each position of said spectacle frame (4) relative to said light beam (6) and analyses the light reflected on said groove (8) for each rotational position.

**14.** Measuring device according to any of the Claims 1 to 13,
**characterised in that** said holding means (3) or said optical path-folding and imaging system (7, 9) is adapted for displacement in a direction orthogonal on said area inscribed by the extension of said groove.

**15.** Measuring device according to Claim 14,
**characterised in that** a sensor means is provided that detects the horizontal orientation between said light beam (6) directed onto said groove (8) and said groove (8), and that a closed-loop control unit is provided that orients said light beam (6) directed onto said groove (8) relative to said groove (8).

**16.** Method of non-contacting determination of the three-dimensional shape of a peripheral groove (8) in a spectacle frame (4), that comprises two groove edges extending in parallel and a groove bottom, wherein

- said groove (8) is irradiated with a single line-shaped beam (6) in a line-shaped area,
- the radiation reflected on said groove (8) is detected with a detector unit (2) for local resolution,
- the position of areas in space on said detector unit (2), which correspond each to the image of said groove edges as well as said groove bottom, is detected,
- the coordinates in space of both groove edges as well as of said groove bottom are determined on the basis of the split-beam method,
- a polynomial graph is established by regression for representation of a sectional profile of said groove (8) in said illuminated line-shaped area,
- wherein said line-shaped beam (6) is displaced in steps relative to said groove (8) until largely all areas of said groove (8) have been detected in the afore-described manner, and
- all sectional profiles so determined are combined to form the three-dimensional shape of said groove (8).

**17.** Method according to Claim 16
**characterised in that** the relative three-dimensional position between said detector unit (2) and said light source (1) is determined in such a way that a determinable angle of triangulation y is inscribed by a light beam (6) incident on said groove (8) as well as by a light beam reflected on said groove (8).

**18.** Method according to Claim 16 or 17,
**characterised in that** the image of a light section through said groove (8) is determined on said detector unit (2) for determining the coordinates in space of said groove edges as well as of said groove bottom, for which step the following relationship applies according to the split-beam method:

$$\Delta x = \frac{b}{z}\ sin\ \gamma \cdot \Delta z$$

wherein:

$\Delta x$     relative spacing of two points of said groove in the detector plane
$\Delta z$     relative spacing of two points of said groove on the real groove contour
$b/z$     imaging scale
$z$     object spacing between the light source and the groove
$\gamma$     angle of triangulation.

**19.** Method according to any of the Claims 16 to 18,
**characterised in that** the image of the groove section irradiated by said line-shaped radiation field, which is detected by said locally resolving detector unit (2), is analysed by lines in such a way that a search is made in each detector line for intensity edges.

**20.** Method according to Claim 19,
**characterised in that** with two intensity edges $FI_1(z)$ and $FI_2(z)$ found in a detector line a mean value $F_M$ is formed in correspondence with the following relationship:

$$F_M = \frac{k_{M1}FI_1(z) + k_{M2}FI_2(z)}{2}$$

wherein:

$k_{M1}, k_{M2}$     factors specific of the material and dependent on the degree of reflection and absorption; $k_{M1} \approx 1$ and $k_{M2} \approx 1$ for metallic spectacle frames, $k_{M1} \approx 2$ and $k_{M2} \approx 0$ for spectacle frames made of synthetic material.

**21.** Method according to Claim 20,
**characterised in that** the respective mean values are selected from all mean values $F_M$ of a sectional profile of said groove (8), which correspond to the two opposing groove edges as well as to the groove bottom.

**22.** Method according to Claim 21,
**characterised in that** the coordinates of the images of said groove edges and said groove bottom, which are related to the detector plane, are converted into three-dimensional coordinates by coordinate transformation with consideration of distortions induced by detector variations which are due to manufacture.

**23.** Method according to any of the Claims 16 to 22,
**characterised in that** a polynomial function of the fourth order is determined by regression for the determined three-dimensional coordinates of said two groove edges as well as of said groove bottom.

**Revendications**

**1.** Dispositif de mesure à déterminer, sans contact, la forme tridimensionnelle d'une rainure périphérique (8) dans une monture de lunettes (4), comprenant

- une source lumineuse (1) dont le rayon lumineux (6) est dirigé sur ladite rainure (8),
- un système optique de reproduction (9), qui projette la lumière réfléchie à ladite rainure (8) sur une unité optique de détection (2) et qui est disposé largement en position centrale relative à ladite rainure (8) à mesurer sur ladite monture de lunettes (2),
- un moyen porteur (3) comme support de ladite monture de lunettes (4), qui est logé pour rotation autour un axe de centrage d'une surface inscrite par ladite rainure périphérique (8) de ladite monture de lunettes (4), relativement à ladite source lumineuse (1) dudit système détecteur (2) ainsi que relativement audit système optique de reproduction (9), ainsi

- qu'une unité d'analyse à déterminer ladite forme tridimensionnelle de ladite rainure (8),

**caractérisé en ce que** ladite source lumineuse (1) irradie ladite rainure (8) par un seul rayon à configuration linéaire au-dedans d'une zone sous forme de ligne,
**en ce qu'**un système optique de déviation (7) est disposé, qui dévie ledit rayon lumineux (6) venant de ladite source lumineuse (1) sur ladite rainure (8) d'une telle façon, que ledit rayon sous forme de ligne soit dirigé en un sens largement orthogonal sur ladite aire inscrite par ladite rainure périphérique (8) de ladite monture de lunettes (4), et
**en ce que** ladite source lumineuse (1) et ledit système détecteur (2) renferment un angle de triangulation, qui peut être déterminé de façon fixe, relatif à ladite rainure (8) à mesurer, afin de permettre l'application du processus à séparation de rayons pour la détermination de la forme tridimensionnelle de ladite rainure (8).

2. Dispositif de mesure selon la revendication 1,
   **caractérisé en ce que** ladite source lumineuse (1) est un laser.

3. Dispositif de mesure selon la revendication 1 ou 2,
   **caractérisé en ce que** ledit système optique de déviation (7) et ledit système optique de reproduction (9) sont configurés sous forme d'une seule unité.

4. Dispositif de mesure selon la revendication 3,
   **caractérisé en ce que** ladite unité est un prisme de réflexion par 90° ou un réflecteur.

5. Dispositif de mesure selon la revendication 1,
   **caractérisé en ce que** ladite source lumineuse (1) et ladite unité de détection (2) sont disposées l'une à côté de l'autre, et **en ce que** ledit rayon lumineux (6) venant de ladite source lumineuse (1) est dirigé en sens largement orthogonal sur l'aire inscrite par ladite rainure périphérique (8) de ladite monture de lunettes (4) et peut ensuite être dévié par ledit système optique de déviation (7) sur ladite rainure (8).

6. Dispositif de mesure selon une quelconque des revendications 1 à 6,
   **caractérisé en ce que** ledit système optique de déviation (7) est orienté de façon, que ledit rayon lumineux (6) soit incident sur ladite rainure (8), de préférence à un angle de 45°.

7. Dispositif de mesure selon une quelconque des revendications 1 à 6,
   **caractérisé en ce que** ledit moyen porteur (3) est une platine tournante.

8. Dispositif de mesure selon une quelconque des revendications 1 à 7,
   **caractérisé en ce que** ledit système optique de déviation (9) est disposé dans le plan de l'aire inscrite par ladite rainure périphérique (8) de ladite monture de lunettes (4) et reste relativement à ladite monture de lunettes (4) mobile pour rotation.

9. Dispositif de mesure selon une quelconque des revendications 1 à 8,
   **caractérisé en ce que** ledit moyen porteur (3) est muni d'un dispositif d'ajustage afin que ladite monture de lunettes (4) puisse être orientée relativement audit système optique de reproduction (9) d'une façon, que ledit système de reproduction (9) soit largement centré relativement à ladite rainure périphérique (8).

10. Dispositif de mesure selon une quelconque des revendications 1 à 9,
    **caractérisé en ce que** ladite unité de détection (2) est une caméra CCD de mesure.

11. Dispositif de mesure selon la revendication 10,
    **caractérisé en ce que** ladite caméra CCD de mesure est une caméra à matrice, qui comprend des photo détecteurs disposés en lignes et colonnes.

12. Dispositif de mesure selon une quelconque des revendications 1 à 11,
    **caractérisé en ce que** ledit moyen porteur (3) est disposé pour une rotation relative à ladite source lumineuse (1), relativement audit système optique de reproduction (9) ainsi que relativement à ladite unité de détection (2), en cycles par un angle respectif défini.

## EP 0 974 038 B1

**13.** Dispositif de mesure selon une quelconque des revendications 1 à 12,
**caractérisé en ce que** ladite unité d'analyse détecte l'angle de rotation dudit moyen porteur (3) pour chaque position de ladite monture de lunettes (4), relative audit rayon lumineux (6), et analyse la lumière réfléchie sur ladite rainure (8) pour chaque position angulaire.

**14.** Dispositif de mesure selon une quelconque des revendications 1 à 13,
**caractérisé en ce que** ledit moyen porteur (3) ou ledit système optique de réflexion et de reproduction (7, 9) est apte à être déplacé en un sens orthogonal sur ladite aire inscrite par l'étendue de ladite rainure.

**15.** Dispositif de mesure selon la revendication 14,
**caractérisé en ce qu'**un moyen détecteur est disposé, qui détecte l'orientation horizontale entre ledit rayon lumineux (6) dirigé sur ladite rainure (8) et ladite rainure (8), et **en ce qu'**une unité d'asservissement est comprise, qui oriente ledit rayon lumineux (6) dirigé sur ladite rainure (8) relativement à ladite rainure (8).

**16.** Procédé à déterminer, sans contact, la forme tridimensionnelle d'une rainure périphérique (8) dans une monture de lunettes (4), qui comprend deux bords de rainure, qui s'étendent en parallèle, et un fond de rainure, dans lequel:

- ladite rainure (8) est irradiée par un seul rayon sous forme de ligne (6) dans une zone sous forme de ligne,
- le rayonnement réfléchi sur ladite rainure (8) est détecté moyennant une unité de détection (2) à résolution locale,
- la position spatiale d'aires sur ladite unité de détection (2), dont chacune correspond à l'image des bords de ladite rainure ainsi qu'à l'image du fond de ladite rainure, est détectée,
- les coordonnés spatiaux des deux bords de la rainure ainsi que du fond de ladite rainure sont déterminés à la base du processus à séparation de rayons,
- un graphe polynomial est établi par régression pour la représentation d'un profil de section de ladite rainure (8) dans ladite aire irradiée sous forme de ligne,
- dans lequel ledit rayon sous forme de ligne (6) est déplacé en paliers, relativement à ladite rainure (8), jusqu'à ce largement toutes les aires de ladite rainure (8) sont détectées de la manière décrite plus haute, et
- tous les profils de section ainsi déterminés sont combinés afin de former la forme tridimensionnelle de ladite rainure (8).

**17.** Procédé selon la revendication 16
**caractérisé en ce que** la position tridimensionnelle relative entre ladite unité de détection (2) et ladite source lumineuse (1) est déterminée d'une telle façon, qu'un angle de triangulation déterminable γ soit inscrit par a rayon lumineux (6) incident sur ladite rainure (8) ainsi que par un rayon lumineux réfléchi sur ladite rainure (8).

**18.** Procédé selon la revendication 16 ou 17,
**caractérisé en ce que** l'image d'une coupe optique prise par ladite rainure (8) est déterminée sur ladite unité de détection (2) afin de déterminer les coordonnés spatiaux des bords et du fond de ladite rainure, à application de la relation suivante en correspondance avec le processus à séparation de rayons:

$$\Delta x = \frac{b}{z}\ sin\ \gamma \cdot \Delta z$$

où:

$\Delta x$      écart relatif de deux points de ladite rainure dans le plan du détecteur
$\Delta z$      écart relatif de deux points de ladite rainure sur le contour réel de la rainure
$b/z$      échelle de l'image
$z$      écart de l'objet entre la source lumineuse et la rainure
$\gamma$      angle de triangulation.

**19.** Procédé selon une quelconque des revendications 16 à 18,
**caractérisé en ce que** l'image de la coupe de la rainure, qui est irradiée par ledit champ de rayonnement sous forme d'une ligne, qui est détecté par ladite unité de détection (2) à résolution locale, est analysée par lignes d'une façon, qu'une recherche est faite dans chaque ligne de détecteur afin d'établir des bords d'intensité.

**20.** Procédé selon la revendication 19,

**15**

**caractérisé en ce que** pour deux bords d'intensité $FI_1(z)$ et $FI_2(z)$, qui sont trouvés dans une ligne de détecteur, une valeur moyenne $F_M$ est formée en correspondance avec la relation suivante:

$$F_M = \frac{k_{M1}FI_1(z) + k_{M2}FI_2(z)}{2}$$

où:

$k_{M1}$, $k_{M2}$     facteurs spécifiques du matériau, qui dépendent du degré de réflexion et de l'absorption; $k_{M1} \approx 1$ et $k_{M2} \approx 1$ pour montures de lunettes en métal, $k_{M1} \approx 2$ et $k_{M2} \approx 0$ pour montures de lunettes faites en matière synthétique.

21. Procédé selon la revendication 20,
   **caractérisé en ce que** les valeurs moyennes respectives sont choisies parmi toutes les valeurs moyennes $F_M$ d'un profil de coupe de ladite rainure (8), qui correspondent aux deux bords opposés de la rainure ainsi qu'au fond de la rainure.

22. Procédé selon la revendication 21,
   **caractérisé en ce que** les coordonnés des images des bords et du fond de ladite rainure, qui sont corrélées au plan du détecteur, sont converties en coordonnés tridimensionnelles par transformation de coordonnés en considération des distorsions, qui sont induites par les variations du détecteur, qui résultent de la fabrication.

23. Procédé selon une quelconque des revendications 16 à 22,
   **caractérisé en ce qu'**une fonction polynomiale du 4me ordre est déterminée par régression pour les coordonnés tridimensionnelles ainsi établis desdits deux bords de la rainure ainsi que du fond de ladite rainure.

Fig. 1

Fig. 1c

Fig. 2

Fig. 3a

Fig. 3b

a)

b)

c)

d)

**Fig. 4**

4

k

A

8

A

8

P₁ P₂ P₃

ca. 120°

**Fig. 5**

Fig. 6

Fig. 7

Fig. 8